# EUROPÄISCHE PATENTSCHRIFT

(11) **EP 1 216 883 B1**
(45) Veröffentlichungstag und Bekanntmachung des Hinweises auf die Patenterteilung: **29.10.2003**
(21) Anmeldenummer: 01130454.0
(22) Anmeldetag: 20.12.2001
(51) Int. Cl.: B60R 1/06

(54) **Rückspiegel, insbesondere für Kraftfahrzeuge**
Rear-view mirror, especially for vehicles
Rétroviseur, en particulier pour véhicules

(30) Priorität: 22.12.2000 DE 10064647
(43) Veröffentlichungstag der Anmeldung: 26.06.2002
(73) Patentinhaber: MEKRA Lang GmbH & Co. KG, 90765 Fürth (DE)
(72) Erfinder: Lang, Heinrich, 91465 Ergersheim (DE); Seiboth, Wolfgang, 91438 Bad Windsheim (DE); Centmayer, Stefan, 91465 Ergersheim (DE)
(74) Vertreter: Winter, Brandl, Fürniss, Hübner, Röss, Kaiser, Polte Partnerschaft

(56) Entgegenhaltungen:
- EP-A- 0 659 609
- DE-A- 4 004 538
- DE-A- 19 840 004
- US-A- 1 703 704
- US-A- 4 306 701
- US-A- 5 583 703
- US-A- 6 059 419

## Beschreibung

Die Erfindung betrifft einen Rückblickspiegel, insbesondere für Kraftfahrzeuge nach dem Oberbegriff des Anspruchs 1.

Aus der DE 198 40 004 A1 ist ein Außenrückblickspiegel für Kraftfahrzeuge bekannt, bei dem das tragende Teil durch eine Trägerplatte mit Wabenstruktur gebildet ist. An dieser Trägerplatte sind Spiegelgehäuse mit Spiegelrahmen, Spiegelelement mit Spiegelscheibe und Verstelleinrichtung befestigt. Die Trägerplatte mit Wabenstruktur ist mittels einer Klemmverbindung an einem Halteteil befestigt und das Halteteil wiederum ist an der Karrosserie des Fahrzeugs befestigt. Ein derartiger Spiegel besitzt eine hohe Stabilität, vergleichsweise geringes Gewicht und eine geringe Anfälligkeit gegen Vibrationen.

Eine vergleichbare Spiegelanordnung ist aus der EP 0 590 510 A1 und der DE 4010 083 bekannt, die ebenfalls eine Trägerplatte als tragendes Element aufweisen, wobei die Trägerplatte jedoch keine Wabenstruktur besitzt.

Ein Nachteil dieses Standes der Technik besteht darin, dass insbesondere die Variante gemäß der EP 0 590 510 A1 ein vergleichsweise hohes Gewicht aufweist.

Aus der gattungsgemäßen US 5 583 703 A ist ein Rückblickspiegel bekannt, der ein Spiegelgehäuse mit einem Spiegelgehäuserahmen, ein Spiegelelement mit einer Spiegelscheibe und einer Spiegelverstelleinrichtung sowie eine Klemmvorrichtung umfasst, mit der der Rückblickspiegel an einem Holm am Fahrzeug befestigt wird. Die Klemmverbindung umfasst ein erstes Klemmteil, das durch den Spiegelgehäuserahmen gebildet ist, und ein zweites Klemmteil, das in Form eines Klemmbügels ausgebildet ist.

Aufgabe der vorliegenden Erfindung ist es, den aus der US 5 583 703 A bekannten Rückblickspiegel so weiterzubilden, dass er eine leichtere Struktur aufweist, präzise und leicht einzustellen ist und der dennoch die notwendige Stabilität aufweist.

Die Lösung dieser Aufgabe erfolgt durch die Merkmale des Anspruchs 1.

Wie bei dem Stand der Technik wird bei der vorliegenden Erfindung der Rückblickspiegel mittels einer Klemmverbindung mit einem ersten Klemmteil und einem zweiten Klemmteil an einem Halteteil, z.B. einem Halterohr, befestigt, wobei das erste Klemmteil der Spiegelgehäuserahmen und das zweite Klemmteil ein Klemmbügel ist.

Dadurch, daß das erste Klemmteil der Spiegelgehäuserahmen und das zweite Klemmteil ein Klemmbügel ist, an dem das Spiegelteil befestigt ist, erübrigt sich eine Trägerplatte, wie sie beim Stand der Technik üblich ist. Hierdurch ergibt sich ein geringeres Gewicht.

Da keine Trägerplatte mehr notwendig ist, verringert sich gegenüber dem Stand der Technik die Zahl der Systemteile oder Komponenten, was eine vereinfachte Montage zur Folge hat und auch geringere Herstellungskosten.

Dadurch, daß die Spiegelverstelleinrichtung unbeweglich an dem Klemmbügel befestigt ist, sind Befestigung und Verstellmöglichkeit des Rückblickspiegels voneinander entkoppelt.

Gemäß einer vorteilhaften Ausgestaltung der Erfindung nach Anspruch 2 wird der Klemmbügel hierbei aus einem stärkeren Material gefertigt als der Spiegelgehäuserahmen, so daß der Klemmbügel das wesentliche tragende Bauteil ist. An dem Klemmbügel als tragendem Bauteil wird die eigentliche Spiegelscheibe mit Verstelleinrichtung befestigt. Da für die Klemmverbindung die gesamte Längen- oder Breitenerstreckung des Spiegelgehäuserahmens zur Verfügung steht kann auch der Klemmbügel entsprechend großflächig ausgestaltet werden, so daß es möglich ist, den Klemmbügel aus verstärktem Kunststoff z.B. mittels glasfaserverstärktem Kunststoff herzustellen. Alternativ kann der Klemmbügel natürlich auch aus Metal gefertigt werden (Anspruch 3).

Gemäß einer bevorzugten Ausführungsform der Erfindung nach Anspruch 4 wird der Klemmbügel an einer Seite in den Spiegelgehäuserahmen eingehakt und auf der anderen Seite mit dem Spiegelgehäuserahmen verschraubt. Hierdurch verringert sich die Anzahl der Schraubverbindungen und die Montage vereinfacht sich.

Gemäß einer vorteilhaften Ausgestaltung der Erfindung nach Anspruch 5 ist die Spiegelscheibe auf einer Glasträgerplatte angeordnet, die mit der Glasverstelleinrichtung verbunden ist, wobei die Glasverstelleinrichtung vorzugsweise elektromotorisch betrieben ist.

Gemäß einer weiteren vorteilhaften Ausgestaltung der Erfindung nach Anspruch 6 wird eine randlose Glasträgerplatte verwendet, bei der die Spiegelglasscheibe leicht über die Glasträgerplatte übersteht und die Glasträgerplatte keinen umlaufenden Rand aufweist, der die Spiegelglasscheibe einfasst. Durch die Glasträgerplatte ohne Rand erhöht sich bei gleich großem Außendesign der Glasnutzen.

Gemäß einer weiteren vorteilhaften Ausgestaltung der Erfindung nach Anspruch 7 umfasst das Spiegelgehäuse eine Spiegelgehäuseabdeckung, die mit dem Spiegelgehäuserahmen mittels einer Schnappverbindung lösbar verbunden bzw. verbindbar ist. Da die Abdeckung keinerlei tragende Funktion besitzt, kann sie sehr leicht und dünnwandig ausgeführt werden. Durch die Schnappverbindung lässt sie sich leicht lösen und kann auf einfache Weise in kundenspezifischen Farben lackiert werden.

Gemäß einer weiteren vorteilhaften Ausgestaltung der Erfindung nach Anspruch 8 umfassen der Klemmbügel und/oder der Spiegelrahmen in dem Berich, in dem das Halteteil anliegt, Mittel in Form von Vorsprüngen oder Nuten, die in entsprechend negativ und passend dazu geformten Nuten oder Vorsprüngen im Halteteil eingreifen. Dadurch wird nicht neben der Klemmschlußverbindung, auch eine formschlüssige Verbindung zu dem Halteteil geschaffen.

Gemäß einer weiteren vorteilhaften Ausgestaltung der Erfindung nach Anspruch 9 umfaßt der Klemmbügel eine Ausnehmung. Durch entsprechende Anordnung der Ausnehmung kann erreicht werden, daß bei abgenommener Spiegelgehäuseabdeckung die Verstelleinrichtung durch die Ausnehmung hindurch zugänglich ist und z.B. Zuleitungen zu der Verstelleinrichtung durch die Ausnehmung geführt werden können.

Weitere Einzelheiten, Merkmale und Vorteile der Erfindung ergeben sich aus der nachfolgenden Beschreibung bevorzugter Ausführungsformen.

Es zeigt:
Fig. 1 eine Seitenansicht einer ersten Ausführungsform der Erfindung;
Fig. 2 eine Schnittdarstellung entlang der Linie A-A in Fig. 1;
Fig. 3 eine Schnittdarstellung entlang der Linie B-B in Fig. 1;
Fig. 4 eine Aufsicht auf den Spiegelgehäuserahmen von vorne;
Fig. 5 eine Seitenansicht einer zweiten Ausführungsform der Erfindung; und
Fig. 6 eine Fig. 2 entspechende Darstellung einer dritten Ausführungsform der Erfindung.

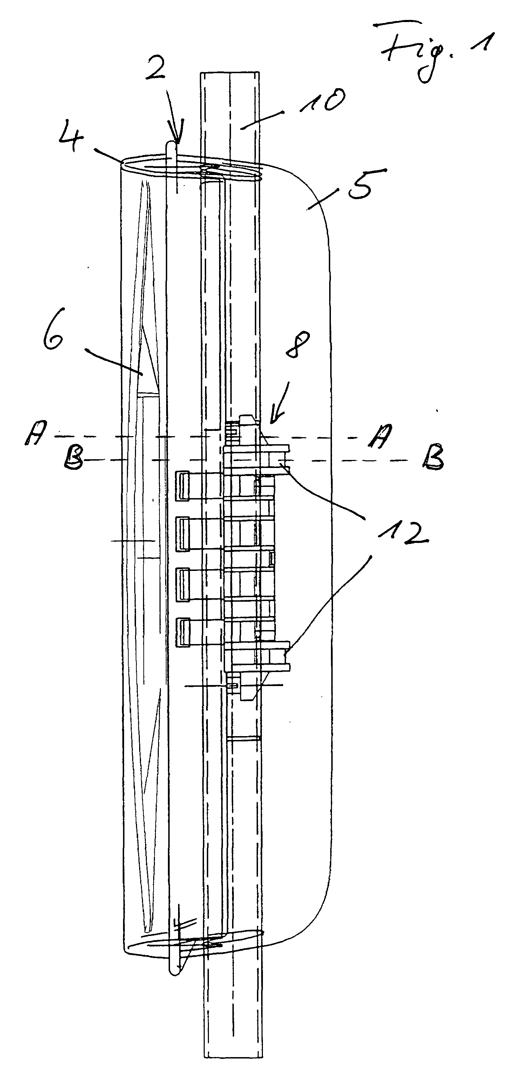

Die Figuren 1 bis 4 zeigen eine erste Ausführungform der Erfindung in verschiedenen Darstellungen. Fig. 1 zeigt eine Seitenansicht mit einem Spiegelgehäuse 2, das sich aus einem Spiegelgehäuserahmen 4 und einer Spiegelgehäuseabdeckung 5 zusammensetzt. In dem Spiegelgehäuse 2 ist ein Spiegelelement 6 angeordnet. Der gesamte Rückblickspiegel wird mittels einer Klemmverbindung 8 an einem Halteteil 10 befestigt. Die Klemmverbindung 8 umfaßt ein erstes Klemmteil in Form des Spiegelgehäuserahmens 4 und ein zweites Klemmteil in Form eines Klemmbügels 12.

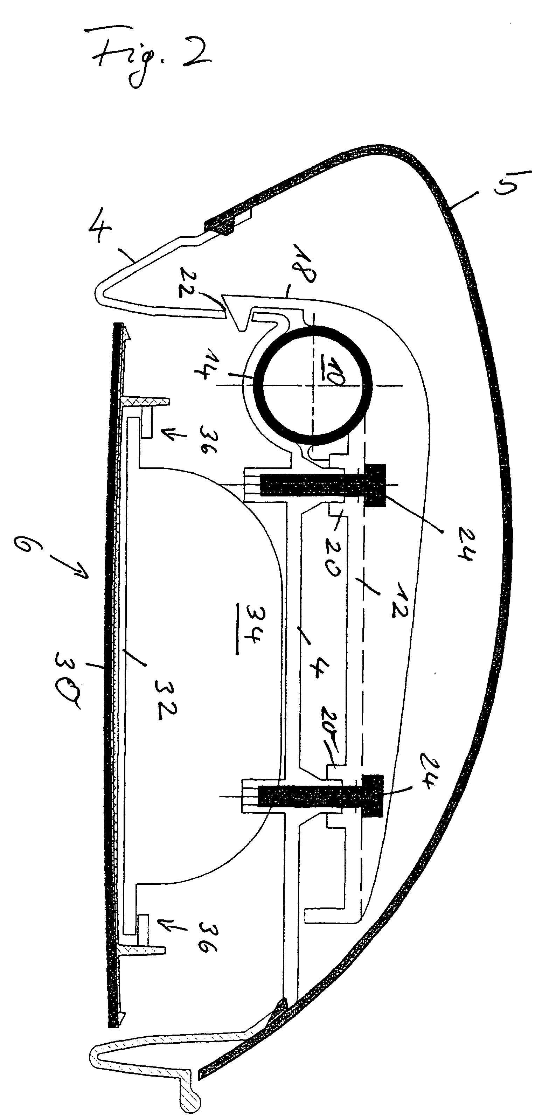

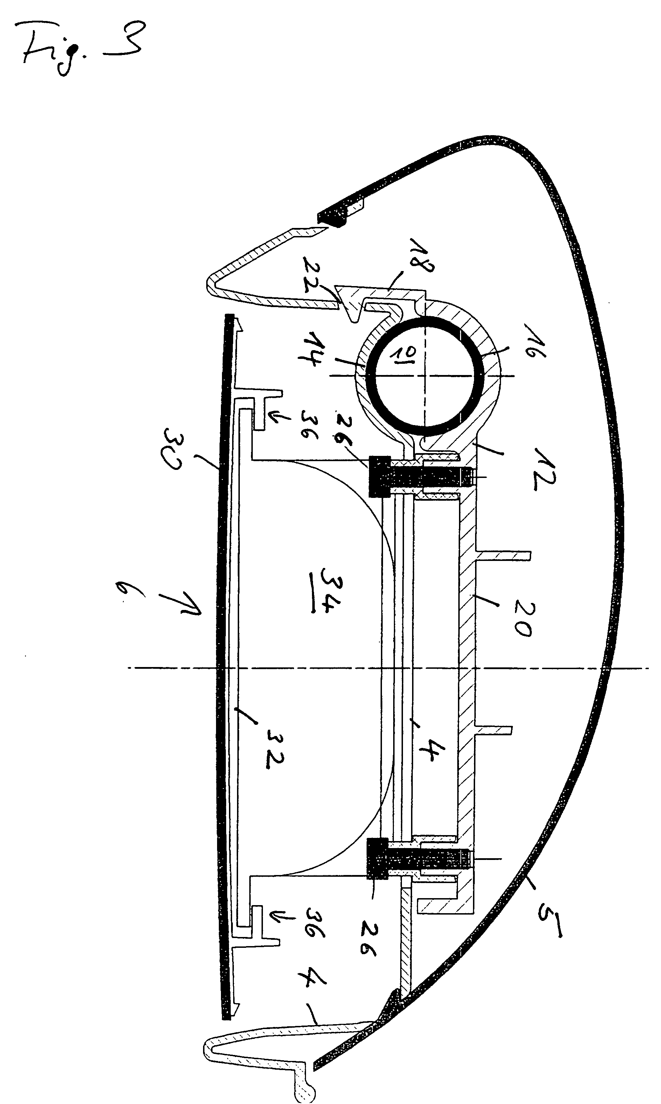

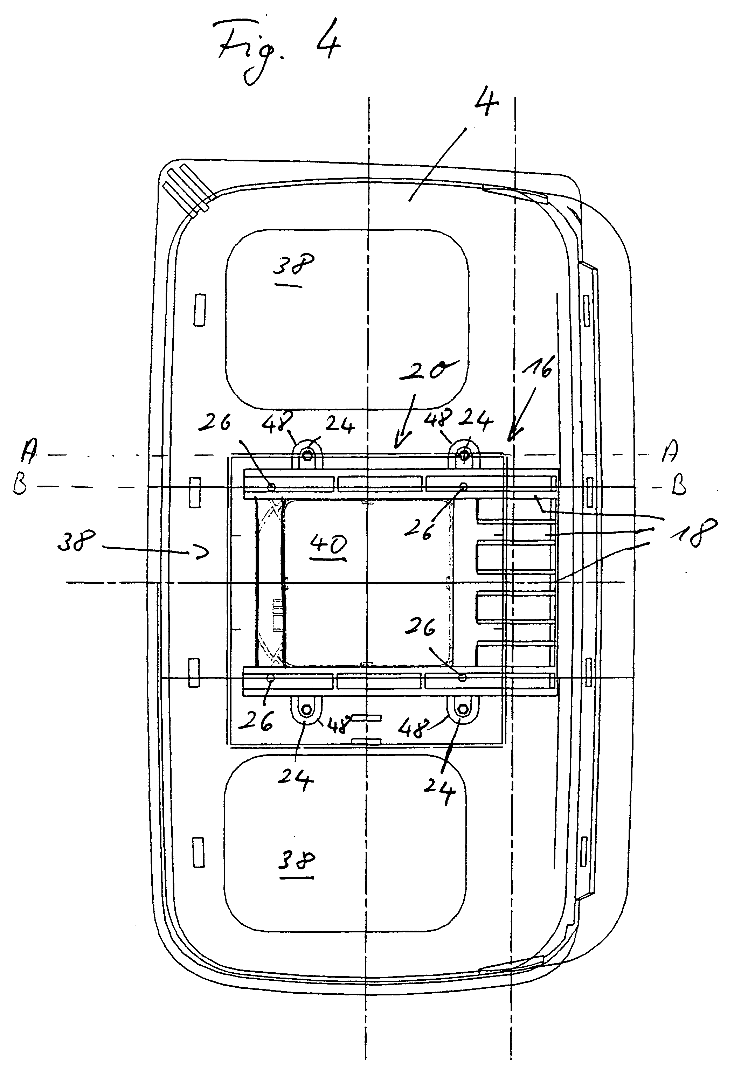

Wie aus den Schnittansichten in Fig. 2 und 3 zu ersehen ist, weist der Spiegelgehäuserahmen 4 in dem Bereich, in dem das Halterohr 10 zu liegen kommt, eine wannenförmige Vertiefung 14 auf. Der Klemmbügel 12 weist eine analoge Vertiefung 16 auf. Durch die beiden wannenförmigen Vertiefungen 14 und 16 wird erreicht, daß das Halterohr 10 nahezu über seinen gesamten Umfang umschlossen wird und somit eine große Fläche zur Kraftübertragung bereitgestellt ist. Von der wannenförmige Vertiefung 16 erstrecken sich auf einer Seite kammartig eine Mehrzahl Hakenelementen 18 weg. Auf der anderen Seite der wannenförmigen Vertiefung 16 erstreckt sich ein Schraubteil 20. Die Hakenelemente 18 sind in in entsprechende Hakenöffnungen 22 in dem Spiegelgehäuserahmen 4 einhakbar. Wie aus den Fig. 2 und 4 zu ersehen ist, wird das Schraubteil 20 des Klemmbügels 12 mittels vier Schraubenverbindungen 24 mit dem Spiegelgehäuserahmen 4 verbunden.

Fig. 3 zeigt, daß das Spiegelelement 6 mit einer Spiegelscheibe 30, einer Glasträgerplatte 32 und einer elektromotorischen Spiegelverstelleinrichtung 34 mit dem Klemmbügel 12 verbunden ist. Hierbei ist die Spiegelverstelleinrichtung 34 mittels vier Schraubenverbindungen 26 von der Verderseite des Spiegels her mit dem Schraubteil 20 des Klemmbügels 12 verschraubt. An der Spiegelverstelleinrichtung 34 ist die Glasträgerplatte 32 mit Spiegelscheibe 30 mittels einer Rastverbindung 36 befestigt. Die Glasträgerplatte 32 ist rahmenlos, wie dies aus der EP 0 659 609 Bl bekannt ist und die Spiegelscheibe 30 steht leicht über die Glasträgerplate 32 hinaus. Insofern wird vollinhaltlich auf die EP 0 659 609 B1 bezug genommen.

Fig. 4 zeigt eine Ansicht des Spiegelgehäuserahmens 4 von vorne ohne Spiegelelement 6. Der Spiegelgehäuserahmen 4 weist für Einbauten und zur Gewichtsreduktion drei Durchbrüche 38 auf. Der in etwa rechteckige Klemmbügel 12 weist im Schraubteil 20 ebenfalls eine Ausnehmung 40 auf, die mit dem mittleren Durchbruch 38 in dem Spiegelgehäuserahmen 4 überlappt. In den verbleibenden oberen und unteren Randstreifen 42 und 44 sind die vier Schraubverbindungen 26 für die Verschraubung des Klemmbügels 12 mit dem Spiegelgehäuserahmen 4 vorgesehen. An dem oberen und unteren Randstreifen 42 und 44 sind jeweils zwei Erweiterungen 48 angeformt. In den Erweiterungen 48 sind die vier Schraubverbindungen 24 für die Verschraubung der Spiegelverstelleinrichtung 34 mit dem Klemmbügel 12 vorgesehen.

Bei der Montage des Spiegels wird zunächst der Klemmbügel 12 in den Spiegelgehäuserahmen 4 eingehakt. Anschließend wird zwischen Klemmbügel 12 und Spiegelgehäuserahmen 4 das Halterohr 10 eingeklemmt und der Klemmbügel 12 mit Spiegelgehäuserahmen 4 von der Rückseite des Spiegels her verschraubt -Schraubverbindung 24. Danach wird von vorne die Spiegelverstelleinrichtung 34 an den Erweiterungen 48 des Klemmbügels 12 angeschraubt -Schraubverbindung 26. Nachfolgend wird die Glasträgerplatte 32 mit Spiegelscheibe 30 auf der Spiegelverstelleinrichtung 34 mittels der Rastverbindung 36 befestigt. Zuletzt wird die Spiegelgehäuseabdeckung 5 an dem Spiegelgehäuserahmen 4 aufgeclipst.

Bei der Ausführungsform nach den Figuren 1 bis 4 erfolgt die Verbindung, genauer Verschraubung, zwischen Klemmbügel 12 und Spiegelgehäuserahmen 4 einerseits und Klemmbügel 12 und Spiegelelement 6 bzw. genauer Spiegelverstelleinrichtung 34 mittels zweier unabhänger Schrauberbindungen. Alternativ - nicht dargestellt - können Spiegelverstelleinrichtung 34, Spiegelgehäuserahmen 4 und Klemmbügel 12 auch mit einer gemeinsamen Schraubverbindung verbunden werden.

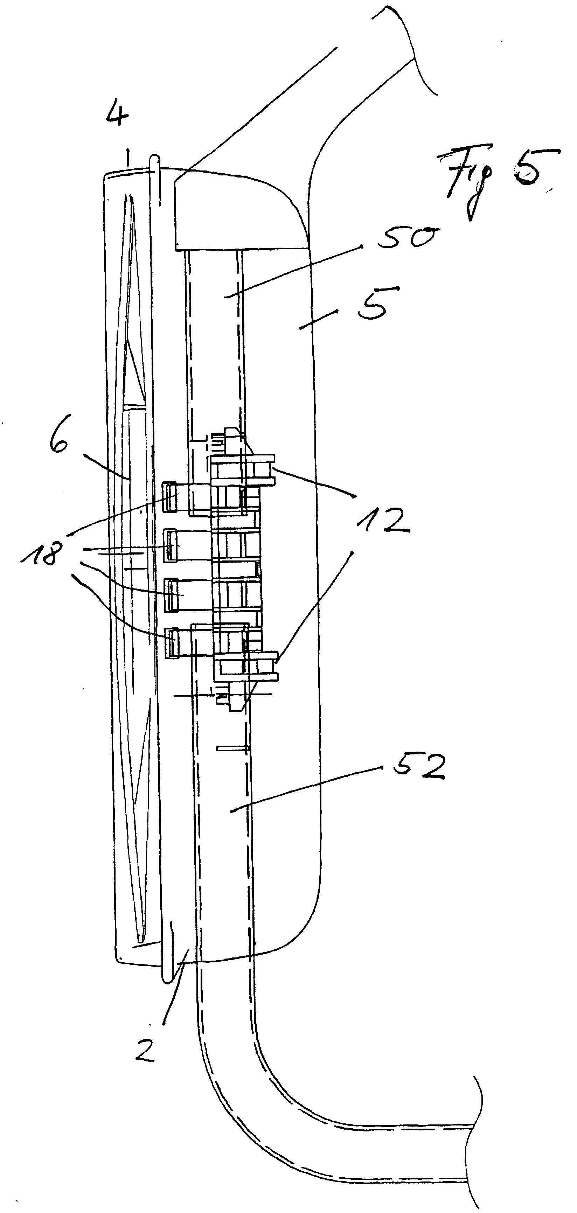

Fig. 5 zeigt eine zweite Ausführungsform der Erfindung in einer Seitenansicht anlog der Darstellung in Fig. 1. Diese zweite Ausführungsform der Erfindung unterscheidet sich von der ersten Ausführungsform dadurch, daß das Halteteil nicht als durchgehendes Halterohr 10, sondern als zweiteiliges Halteteil mit einem ersten und zweiten Haltearm 50 und 52 ausgebildet ist. Hierbei wird der erste Haltearm 50 durch den oberen Randstreifen 42 des Klemmbügels und der zweite Haltearm 52 durch den unteren Randstreifen 44 des Klemmbügels 12 erfaßt. Im sonstigen Aufbau stimmt die zweite Ausführungsform mit der ersten Ausführungsform überein.

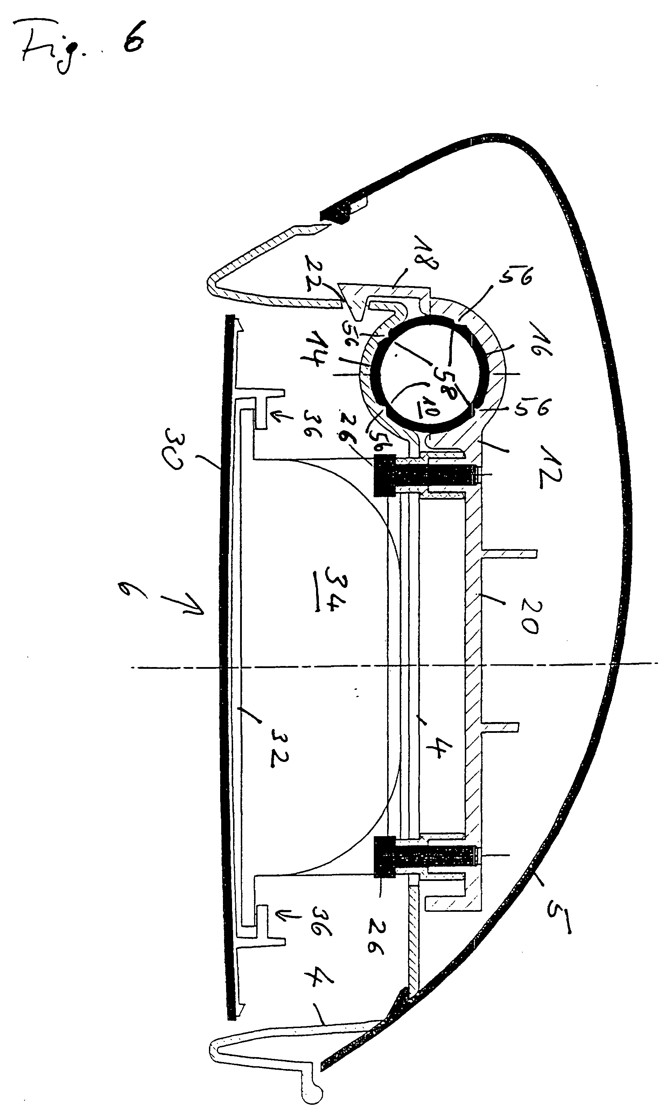

Fig. 6 zeigt eine dritte Ausführungsform der Erfindung in einer Fig. 3 entspechenden Darstellung. Die dritte Ausführungsform unterscheidet sich von der ersten oder zweiten Ausführungsform lediglich dadurch, daß die Verbindung zwischen Halteteil 10, 50, 52 und Klemmbügel 12 zusätzlich zu der Klemmverbindung mittels einer Formschlußverbindung hergestellt wird. Hierzu sind in den wannenförmigen Vertiefungen 14 und 16 zusätzlich Vorsprünge 56 vorgesehen, die in entsprechende Vertiefungen 58 in dem Halteteil 10, 50, 52 eingreifen. Hierdurch wird der Spiegel zusätzlich gegen Verdrehung gegenüber dem Halteteil 10, 50, 52 gesichert. Zusätzlich oder alternativ - nicht dargestellt - können auch in dem Halteteil 10, 50, 52 Vorsprünge vorgesehen werden, die in entsprechende Vertiefungen in den wannenförmigen Vertiefungen 14 und 16 eingreifen.

Spiegelgehäuserahmen 4 und Spiegelgehäuseabdeckung 5 sind vorzugsweise aus ABS hergestellt. Der Klemmbügel 12 besteht vorzugsweise aus glasfaserverstärktem Kunststoff - PA 6.6 GF35. Die Glasträgerplatte 32 ist vorzugsweise aus ABS mit 30% Glasfaseranteil hergestellt und weist eine Dicke im Bereich zwischen 1 und 1,5 mm. Die Wandstärke der übrigen Bauteile bewegt sich im Bereich zwischen 2 und 2,5 mm. Durch diese Maßnahmen ergeben sich Gewichts- und Kostenreduktionen. Zudem verringert sich die Vibrationsanfälligkeit.

In bestimmten Fällen kann es auch sinnvoll sein, die wannenförmige Vertiefung 14 und den Bereich der Schraubverbindungen 24 des Spiegelgehäuserahmnes 4 mittels Einleger aus vesrstärktem Material zu verstärken oder diese Bereiche aus GF-verstärktem Kunststoff herzustellen.

### Bezugszeichenliste:

- 2: Spiegelgehäuse
- 4: Spiegelgehäuserahmen
- 5: Spiegelgehäuseabdeckung
- 6: Spiegelelement
- 8: Klemmverbindung
- 10: Spiegelhalteteil bzw. Spiegelhalterohr
- 12: Klemmbügel
- 14: wannenförmige Vertiefung
- 16: wannenförmige Ausbuchtung
- 18: Hakenelemente
- 20: Schraubteil
- 22: Hakenöffnungen
- 24: Schraubverbindungen zwischen 12 und 4
- 26: Schraubverbindungen zwischen 12 und 34
- 30: Spiegelscheibe
- 32: Glasträgerplatte
- 34: Spiegelverstelleinrichtung
- 36: Rastverbindung
- 38: Durchbrüche in 4
- 40: Ausnehmung in 12
- 42: oberer Randstreifen von 12
- 44: unterer Randstreifen von 12
- 48: Erweiterungen an 42 und 44
- 50: erster Haltearm
- 52: zweiter Haltearm
- 56: Vorsprünge in 14, 16
- 58: Vertiefungen in 10, 50, 52

## Patentansprüche

1. Rückblickspiegel, insbesondere für Kraftfahrzeuge, mit
- einem Spiegelgehäuse (2), das einen Spiegelgehäuserahmen (4) umfasst,
- einem Spiegelelement (6), das eine Spiegelscheibe (30) und eine Spiegelverstelleinrichtung (34) umfasst und das in dem Spiegelgehäuse (2) angeordnet ist,
- einer Klemmverbindung (8) mit einem ersten und einem zweiten Klemmteil zum Verbinden des Rückblickspiegels mit einem Spiegelhalteteil (10; 50, 50),
- wobei das erste Klemmteil der Spiegelgehäuserahmen (4) ist, und
- wobei das zweite Klemmteil ein Klemmbügel (12) ist,
**dadurch gekennzeichnet, dass**
- die Spiegelverstelleinrichtung (34) gegenüber dem Klemmbügel (12) unbeweglich mittels einer Schraubverbindung an dem Klemmbügel (12) befestigt ist.

2. Rückblickspiegel nach Anspruch 1, **dadurch gekennzeichnet, daß** der Spiegelgehäuserahmen (4) aus Kunststoff besteht und daß der Klemmbügel (12) aus einem stärkerem Material besteht, als der Spiegelgehäuserahmen (4).

3. Rückblickspiegel nach Anspruch 2, **dadurch gekennzeichnet, daß** der Klemmbügel (12) aus verstärktem, insbesondere mittels Glasfaser verstärktem Kunststoff oder aus Metall besteht.

4. Rückblickspiegel nach einem der vorhergehenden Ansprüche, **dadurch gekennzeichnet, daß** der Klemmbügel (12) an einer Seite an dem Spiegelgehäuserahmen (4) eingehakt und der anderen Seite mit dem Spiegelgehäuserahmen (4) verschraubt ist.

5. Rückblickspiegel nach einem der vorhergehenden Ansprüche, **dadurch gekennzeichnet, dass** die Spiegelscheibe (30) auf einer Glasträgerplatte (32) angeordnet ist, die mit der Spiegelverstelleinrichtung (34) verbunden ist, wobei die Spiegelverstelleinrichtung (34) vorzugsweise elektromotorisch betrieben ist.

6. Rückblickspiegel nach Anspruch 5, **dadurch gekennzeichnet, daß** die Glasträgerplatte (32) randlos ist.

7. Rückblickspiegel nach einem der vorhergehenden Ansprüche, **dadurch gekennzeichnet, daß** das Spiegelgehäuse (2) eine Spiegelgehäuseabdeckung (5) umfaßt, die mittels einer Schnappverbindung mit dem Spiegelgehäuserahmen (4) lösbar verbindbar ist.

8. Rückblickspiegel nach einem der vorhergehenden Ansprüche, **dadurch gekennzeichnet, daß** die Klemmverbindung (8) Mittel (56, 58) zur formschlüssigen Verbindung zwischen dem Spiegelgehäuserahmen (4) und dem Spiegelhalteteil (10; 50, 52) und/oder dem Klemmbügel (12) und dem Spiegelhalteteil (10; 50, 52) aufweist.

9. Rückblickspiegel nach einem der vorhergehenden Ansprüche, **dadurch gekennzeichnet, daß** der Klemmbügel (12) eine Ausnehmung (40) aufweist.

## Claims

1. A rearview mirror, especially for motor vehicles comprising:
- a mirror housing (2) which includes a mirror housing framing (4) ;
- a mirror element (6) including a mirror pane (30) and a mirror positioning apparatus (34) and being located in the mirror housing (2);
- a clamp connection (8) with a first and a second clamping part for the connection of the rearview mirror with a mirror holding component (10; 50, 52);
- wherein the first clamping part is the mirror housing framing (4); and
- wherein the second clamping part is a clamping bracket (12);
**characterized in that**
- the mirror positioning apparatus (34) is fixedly secured with respect to the clamping bracket (12) by means of a bolted connection at the clamping bracket (12).

2. The rearview mirror according to claim 1, **characterized in that** the mirror housing framing (4) is made of plastic and **in that** the clamping bracket (12) is composed of a stronger material than is the mirror housing framing (4).

3. The rearview mirror according to claim 2, **characterized in that** the clamping bracket (12) is made of reinforced plastic, especially reinforced by means of glass fiber, or is made of metal.

4. The rearview mirror according to any one of the preceding claims, **characterized in that** the clamping bracket (12) is secured by force fit clips on one side of the mirror housing framing (4) and on the other side is secured by screws to the mirror housing framing (4).

5. The rearview mirror according to any one of the preceding claims, **characterized in that** the mirror pane (30) is provided on a glass carrier plate (32) which is connected to the mirror positioning apparatus (34), the mirror adjustment apparatus (34) being preferably driven by means of an electric motor.

6. The rearview mirror according to claim 5, **characterized in that** the glass carrier plate (32) has no peripheral edging.

7. The rearview mirror according to any one of the preceding claims, **characterized in that** the mirror housing (2) includes a mirror housing cover (5) which, by means of a snap-in connection, is releasably bindable to the mirror housing framing (4).

8. The rearview mirror according to any one of the preceding claims, **characterized in that** the clamping connection (8) possesses means (56, 58) for shape-forced connection between the mirror housing framing (4) and the mirror holding component (10; 50, 52) and/or the clamping bracket (12) and the mirror holding component (10; 50, 52).

9. The rearview mirror according to any one of the preceding claims, **characterized in that** the clamping bracket possesses an opening (40).

## Revendications

1. Rétroviseur, notamment pour véhicules automobiles, doté de :
- un boîtier du miroir (2) comprenant un cadre du boîtier du miroir (4),
- un élément de miroir (6) comprenant une glace (30) et un dispositif de réglage du miroir (34) et disposé dans un boîtier du miroir (2),
- une jonction par serrage (8) avec une première et une deuxième pièce de serrage pour raccorder le rétroviseur à une pièce de fixation du miroir (10 ; 50, 52),
- la première pièce de serrage étant le cadre du boîtier du miroir (4), et
- la deuxième pièce de serrage étant un étrier de serrage (12)
**caractérisé en ce que**
- le dispositif de réglage du miroir (34) est fixé sur l'étrier de serrage (12) de manière inamovible par rapport à l'étrier de serrage (12) à l'aide d'un raccord à vis.

2. Rétroviseur selon la revendication 1, **caractérisé en ce que** le cadre du boîtier du miroir (4) est en matière plastique et **en ce que** l'étrier de serrage (12) est fabriqué dans une matière plus dure que le cadre du boîtier du miroir (4).

3. Rétroviseur selon la revendication 2, **caractérisé en ce que** l'étrier de serrage (12) est en métal ou en matière plastique renforcée notamment par des fibres de verre.

4. Rétroviseur selon l'une quelconque des revendications précédentes, **caractérisé en ce que** l'étrier de serrage (12) est enclenché sur un côté sur le cadre du boîtier du miroir (4) et **en ce que** l'autre côté est vissé au cadre du boîtier du miroir (4).

5. Rétroviseur selon l'une quelconque des revendications précédentes, **caractérisé en ce que** la glace (30) est disposée sur une plaque de support de glace (32) reliée au dispositif de réglage du miroir (34), le dispositif de réglage du miroir (34) étant de préférence commandé par un moteur électrique.

6. Rétroviseur selon la revendication 5, **caractérisé en ce que** la plaque de support de glace (32) n'a pas de bord.

7. Rétroviseur selon l'une quelconque des revendications précédentes, **caractérisé en ce que** le boîtier du miroir (2) comprend un écran du boîtier du miroir (5) qui peut être relié de manière amovible au cadre du boîtier du miroir (4) à l'aide d'un assemblage à enclenchement.

8. Rétroviseur selon l'une quelconque des revendications précédentes, **caractérisé en ce que** la jonction par serrage (8) comporte des moyens (56, 58) pour relier par complémentarité de forme le cadre du boîtier du miroir (4) et la pièce de fixation du miroir (10 ; 50, 52) et/ou l'étrier de serrage (12) et la pièce de fixation du miroir (10 ; 50, 52).

9. Rétroviseur selon l'une quelconque des revendications précédentes, **caractérisé en ce que** l'étrier de serrage (12) comporte un évidement (40).
